(19) Europäisches Patentamt
European Patent Office
Office européen des brevets

(11) **EP 4 312 329 A1**

(12) **EUROPÄISCHE PATENTANMELDUNG**

(43) Veröffentlichungstag:
**31.01.2024 Patentblatt 2024/05**

(21) Anmeldenummer: **22186727.8**

(22) Anmeldetag: **25.07.2022**

(51) Internationale Patentklassifikation (IPC):
***H02J 3/00*** *(2006.01)*

(52) Gemeinsame Patentklassifikation (CPC):
**H02J 3/001;** H02J 2203/10; H02J 2203/20

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Duckheim, Mathias**
  **91052 Erlangen (DE)**
• **Metzger, Michael**
  **85570 Markt Schwaben (DE)**
• **Wagner, Eva**
  **91056 Erlangen (DE)**

(74) Vertreter: **Siemens Patent Attorneys**
**Postfach 22 16 34**
**80506 München (DE)**

(54) **VERFAHREN UND STEUEREINHEIT ZUR STEUERUNG EINES STROMNETZES**

(57) Es wird ein Verfahren zur Steuerung eines Stromnetzes (2) mit mehreren Netzknoten (3) mittels einer Steuereinheit (1) vorgeschlagen, das wenigstens durch die folgenden Schritte gekennzeichnet ist:
- (S1a, S1b, Slab) Bereitstellen einer A-priori-Verteilung (6) für Zustandsgrößen des Stromnetzes (2);
- (S2) Bereitstellen einer Messverteilung (7) von Messgrößen bei gegebenem Zustand des Stromnetzes (2);
- (S3) Ausbilden einer A-posteriori-Verteilung (42) für die Zustandsgrößen mittels der A-priori-Verteilung (6) und der Messverteilung (7);

- (S4) Ermitteln einer Wahrscheinlichkeit (4) für einen kritischen Zustand für wenigstens einen der Netzknoten (3) mittels der aus der der A-posteriori-Verteilung (42) für den Netzknoten ermittelten Marginalverteilung (43); und
- (S5) Durchführen von netzdienlichen und/oder systemdienlichen Maßnahmen durch die Steuereinheit (1), wenn die ermittelte Wahrscheinlichkeit (4) größer oder gleich einem festgelegten Schwellenwert ist.
  Weiterhin betrifft die Erfindung eine Steuereinheit (1) zur Durchführung des Verfahrens.

FIG 1

EP 4 312 329 A1

**Beschreibung**

Die Erfindung betrifft ein Verfahren gemäß dem Oberbegriff des Patentanspruches 1 sowie eine Steuereinheit gemäß dem Oberbegriff des Patentanspruches 15.

Durch eine fortschreitende Installation zusätzlicher Verbraucher, beispielsweise im Hinblick auf die Elektromobilität, und volatiler dezentraler Erzeugungseinheiten, beispielsweise mittels Photovoltaikanlagen oder Windkraftanlagen, kann es insbesondere in Mittel- und Niederspannungsnetzen vermehrt zu kritischen Betriebszuständen kommen.

Neben einem aufwendigen und kostspieligen Netzausbau sind Betriebsansätze vorgesehen, die die Verbraucher in kritischen Netzsituationen gezielt steuern, um Überlastungen zu vermeiden. Solche kritischen Netzsituationen beziehungsweise Zustände können durch eine Verletzung des zulässigen Spannungsbandes, dem Auslösen einer Sicherung oder durch ein Überschreiten von Maximalleistungen gekennzeichnet sein. Allerdings erfordern die genannten Betriebsansätze eine Kenntnis über den Zustand des Stromnetzes, beispielsweise darüber wie nahe eine zu vermeidende Spannungsbandüberschreitung oder eine Stromgrenze an einem oder mehreren Netzknoten ist.

Für Mittel- und Niederspannungsnetze ist derzeit wenig bis gar keine Messinfrastruktur installiert. Dadurch können einerseits nur ungenaue Schätzungen des Zustandes ermittelt werden, andererseits ist für einen Netzbetreiber lediglich relevant, ob eine Grenzwertverletzung nah beziehungsweise wahrscheinlich ist.

Nach dem Stand der Technik wird zur Lösung des genannten Problems eine Netzzustandsschätzung durchgeführt. Hierbei wird versucht, die Genauigkeit der verfügbaren Messwerte über Gewichte in einer zu minimierenden quadratischen Zielfunktion zu berücksichtigen. Der dadurch geschätzte Netzzustand ist deterministisch. Dadurch kann somit eine hohe Unsicherheit bezüglich des wahren Netzzustandes vorliegen.

Weiterhin sind probabilistische Verfahren zur Zustandsschätzung bekannt. Hierbei werden jedoch lediglich die Erwartungswerte oder maximalen Werte als Schätzwert berücksichtigt, sodass wiederum ein deterministisches Ergebnis vorliegt.

Der vorliegenden Erfindung liegt die Aufgabe zugrunde, eine verbesserte Steuerung eines Stromnetzes basierend auf einem probabilistischen Ansatz bereitzustellen.

Die Aufgabe wird durch ein Verfahren mit den Merkmalen des unabhängigen Patentanspruches 1 sowie durch eine Vorrichtung mit den Merkmalen des unabhängigen Patentanspruches 15 gelöst. In den abhängigen Patentansprüchen sind vorteilhafte Ausgestaltungen und Weiterbildungen der Erfindung angegeben.

Das erfindungsgemäße Verfahren zur Steuerung eines Stromnetzes mit mehreren Netzknoten erfolgt mittels einer Steuereinheit und ist gekennzeichnet durch die folgenden Schritte:

- Bereitstellen einer A-priori-Verteilung für Zustandsgrößen des Stromnetzes;
- Bereitstellen einer Messverteilung von Messgrößen bei gegebenem Zustand des Stromnetzes;
- Ausbilden einer A-posteriori-Verteilung für die Zustandsgrößen mittels der A-priori-Verteilung und der Messverteilung;
- Ermitteln einer Wahrscheinlichkeit für einen kritischen Zustand für wenigstens einem der Netzknoten mittels der aus der der A-posteriori-Verteilung für den Netzknoten ermittelten Marginalverteilung; und
- Durchführen von netzdienlichen und/oder systemdienlichen Maßnahmen durch die Steuereinheit, wenn die ermittelte Wahrscheinlichkeit größer oder gleich einem festgelegten Schwellenwert ist.

Die Reihenfolge der Schritte des Verfahrens impliziert keine zeitliche Reihenfolge der Schritte. Insbesondere können diese - soweit möglich - zeitlich parallel durchgeführt werden. Mit anderen Worten werden bevorzugt eine oder mehrere Schritte des Verfahrens zeitlich parallel durchgeführt.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Insbesondere umfasst die Steuereinheit eine oder mehrere Recheneinheiten, die dazu ausgebildet und eingerichtet sind, beispielsweise mittels Befehlen, die Wahrscheinlichkeit zu ermitteln.

Das Stromnetz ist ein elektrisches Verteilnetz, insbesondere ein Niederspannungsnetz und/oder ein Mittelspannungsnetz. Das Stromnetz weist mehrere Netzknoten auf. Weiterhin weist das Stromnetz typischerweise mehrere Leitungen auf, die sich von einem der Netzknoten zu einem weiteren der Netzknoten erstrecken. Hierbei kann die Topologie des Stromnetzes Stränge und/oder Ringe umfassen.

Das Stromnetz weist weiterhin eine oder mehrere Zustandsgrößen auf, wobei typischerweise jedem Netzknoten eine oder mehrere Zustandsgrößen zugeordnet sind. Insbesondere weist jeder Netzknoten eine oder mehrere komplexwertige Spannungen, das heißt Spannungsbeträge und Spannungswinkel (Winkel), als Zustandsgrößen auf. Das Stromnetz kann mehrphasig ausgestaltet sein.

Zustandsgrößen des Stromnetzes können komplexwertige Spannungen, komplexwertige Ströme, Phasensymmetrien, höhere Harmonische, beispielsweise durch Modellierung der im Netz zugeschalteten Anlagen/Geräte, und/oder Transformatorbemessungsleistungen, sein. Besonders bevorzugt sind die Zustandsgrößen komplexwertige

**EP 4 312 329 A1**

Spannungen. Grundsätzlich kann jedoch jede technische Größe des Stromnetzes verwendet werden, die durch einen zugehörigen Grenzwert einen nicht kritischen und kritischen Betrieb des Stromnetzes kennzeichnet.

Systemdienliche Maßnahmen sind insbesondere Steuereingriffe beziehungsweise Stelleingriffe die sich auf eine Frequenzerhaltung, eine Spannungshaltung, einen sicheren Betrieb und/oder einen Versorgungswiederaufbau des Stromnetzes beziehen. Diese werden typischerweise durch einen Netzbetreiber des Stromnetzes durchgeführt, sodass die Steuereinheit durch eine Netzleitvorrichtung des Netzbetreibers umfasst sein kann.

Netzdienliche Maßnahmen können das Steuern einzelner oder mehrere elektrische Anlagen, insbesondere von Erzeugern, Verbrauchern und/oder Speichern, sein, welche durch ihren gesteuerten Betrieb dazu beitragen, Netzengpässe, Netzausbaubedarf und/oder optimierte Netzbetriebsführung zu verringern. Hierbei erfolgt die Steuerung durch die Steuereinheit typischerweise über lokale Steuereinheiten der Anlagen mittelbar.

Die erfindungsgemäße Steuereinheit ist somit dazu ausgebildet und/oder eingerichtet, systemdienliche und/oder netzdienliche Maßnahmen durchzuführen. Dies kann unmittelbar oder mittelbar erfolgen. Beispielsweise ermittelte die Steuereinheit basierend auf der ermittelten Wahrscheinlichkeit Steuersignale, die diese an systemdienliche Anlagen, beispielsweise Transformatoren, und/oder netzdienliche Anlagen, beispielsweise innerhalb von Energiesystemen, übermittelt. Die Anlagen werden dann entsprechend den übermittelten Steuersignalen gesteuert. Dadurch erfolgt eine mittelbare Steuerung des Stromnetzes durch die Steuereinheit.

Die Verteilungen beziehungsweise die Wahrscheinlichkeitsverteilungen können diskret und/oder als Wahrscheinlichkeitsdichte bereitgestellt werden. Grundsätzlich können die Verteilungen über ihre zugehörigen Variablen integriert werden. Im diskreten Fall ist unter einer Integration eine entsprechende Summierung zu verstehen. Die Verteilungen sind typischerweise - aufgrund der Anzahl von Netzknoten und/oder Leitungen - mehrdimensional. Insbesondere sind diese als mehrdimensionale Gaußverteilungen beziehungsweise Normalverteilungen ausgebildet.

In einem ersten Schritt des erfindungsgemäßen Verfahrens wird eine A-priori-Verteilung für die Zustandsgrößen bereitgestellt. Beispielsweise ist dadurch die Verteilung der Spannungsbeträge und der Winkel für jeden der Netzknoten bekannt. Die A-priori-Verteilung kann basierend auf Messungen der Zustandsgrößen und/oder abgeleiteten Größen, wie beispielsweise Wirkleistungen und/oder Blindleistungen, über einen festgelegten Zeitraum, beispielsweise ein Jahr, ermittelt und bereitgestellt werden. Die A-priori-Verteilung p(x) quantifiziert somit, mit welcher Wahrscheinlichkeit $p$ ein Netzzustand beziehungsweise Zustand x vorliegt.

Gemäß einem zweiten Schritt der vorliegenden Erfindung wird eine Messverteilung von Messgrößen bei gegebenem Zustand des Stromnetzes bereitgestellt. Mit anderen Worten ist die Messverteilung durch $p(z|x)$ gegeben, das heißt durch die Wahrscheinlichkeitsverteilung der Messungen z bei gegebenen Zustand x des Stromnetzes. Die Messverteilung kann beispielsweise durch Messwerte der genannten Messgrößen, insbesondere Leistungen, Spannungen, Ströme und dergleichen, ermittelt werden.

In einem dritten Schritt des erfindungsgemäßen Verfahrens wird eine A-posteriori-Verteilung $p(x|z)$ für die Zustandsgrößen x bei gegebenen Messungen z mittels der A-priori-Verteilung $p(z|x)$ und der Messverteilung p(x) ausgebildet. Hierzu wird besonders bevorzugt der Bayesianische Ansatz (Satz von Bayes) verwendet, demnach $p(x|z) \propto p(z|x) \cdot p(x)$ ist. Somit ist nach dem dritten Schritt die statistische Verteilung der Zustandsgrößen bei gegebenen Messungen beziehungsweise Messwerten bestimmt. Die Verteilung $p(x|z)$ ist deshalb von Vorteil, da diese die Information umfasst, mit welcher Wahrscheinlichkeit ein Netzzustand bei gegebenen Messungen vorliegt. Allerdings ist diese A-Posteriori-Verteilung, das heißt nach Kenntnis der Messwerte, nicht ohne weiteres bekannt. Sie kann jedoch erfindungsgemäß aus der Verteilung der Zustandsgrößen und der Messverteilung, die a-priori ermittelbar sind, durch Verwendung des Satzes von Bayes ermittelt werden.

Gemäß einem vierten Schritt des erfindungsgemäßen Verfahrens wird eine Wahrscheinlichkeit für einen kritischen Zustand (kritische Wahrscheinlichkeit) für wenigstens einen der Netzknoten mittels der aus der der A-posteriori-Verteilung für den Netzknoten ermittelten Marginalverteilung ermittelt. Vorteilhafterweise wird dadurch - im Gegensatz zu bekannten Verfahren, die beispielsweise lediglich Erwartungswerte verwenden - die gesamte Verteilung der Zustände zur Ermittlung der Wahrscheinlichkeit für einen kritischen Zustand des Stromnetzes beziehungsweise des Netzknotens verwendet. Um eine Verteilung für jeden Netzknoten zu erhalten, wird die A-posteriori-Verteilung jeweils marginalisiert, das heißt die weiteren Netzknoten werden ausintegriert beziehungsweise über die weiteren Netzknoten wird summiert. Dadurch kann die Marginalverteilung beziehungsweise Randverteilung für jeden Netzknoten ermittelt werden. Aus der ermittelten Marginalverteilung für wenigstens einen der Netzknoten wird dann die Wahrscheinlichkeit für einen kritischen Zustand des Netzknotens ermittelt. Hierbei liegt der Ermittlung die gesamte Verteilung zugrunde. Beispielsweise wird die Wahrscheinlichkeit über ein Integral über einen Teilbereich der Marginalverteilung ermittelt. Hierbei geht vorteilhafterweise die gesamte Verteilung ein. Weiterhin kann dadurch eine probabilistische Aussage für das Vorliegen eines kritischen Netzzustandes ermittelt werden.

In einem fünften Schritt des erfindungsgemäßen Verfahrens erfolgt die Steuerung des Stromnetzes durch das Durchführen von netzdienlichen und/oder systemdienlichen Maßnahmen beziehungsweise Eingriffen. Diese erfolgen erfindungsgemäß dann, wenn die ermittelte Wahrscheinlichkeit einen festgelegten Schwellenwert erreicht oder überschreitet. Mit anderen Worten werden erst dann Maßnahmen, beispielsweise zur Netzstabilisierung, durchgeführt, wenn die Wahrscheinlichkeit für einen kritischen Netzzustand einen bestimmten Wert überschreitet. Dadurch wird vorteilhafterweise ein probabilistischer und somit nicht deterministischer Ansatz für die Netzbetriebsführung ausgebildet. Beispielsweise gibt die ermittelte Wahrscheinlichkeit an, mit welcher Wahrscheinlichkeit an einem der Netzknoten eine Verletzung des Spannungsbandes des Stromnetzes erfolgt. Weiterhin können mehrere Schwellenwerte festgelegt werden, wobei die jeweiligen Maßnahmen vom Erreichen des jeweiligen Schwellenwertes abhängig sind.

Mit anderen Worten wird gemäß der vorliegenden Erfindung, im Gegensatz zur reinen Verwendung des Erwartungswertes als deterministischen Schätzwert, die gesamte A-Posteriori-Verteilung zur Ermittlung der Wahrscheinlichkeit für einen kritischen Netzzustand verwendet. Dadurch wird die Steuerung des Stromnetzes verbessert.

Gemäß der vorliegenden Erfindung werden somit probabilistischen Ansätze, insbesondere Bayesianische Verfahren, verwendet. Dadurch ist es möglich, einem Zustandsschätzer stochastische Eingangsgrößen (mit Unsicherheiten behaftete Werte) zu übergeben. Die Ausgangsgröße der vorliegenden Erfindung ist ebenfalls eine stochastische Verteilung (A-Posteriori-Verteilung), welche entsprechend ausgewertet wird. Dadurch ist der Netzbetreiber in Kenntnis darüber, welche Abgänge und/oder Netzknoten wahrscheinlich durch einen kritischen Zustand betroffen sind. Die Steuereinheit reagiert dann entsprechend mit Steuereingriffen und/oder Regeleingriffen.

Die erfindungsgemäße Steuereinheit zur Steuerung eines Stromnetzes mit mehreren Netzknoten umfasst eine Recheneinheit und ist dadurch gekennzeichnet, dass die Recheneinheit dazu eingerichtet ist, ein Verfahren gemäß der vorliegenden Erfindung und/oder einer ihrer Ausgestaltungen durchzuführen.

Insbesondere umfasst eine Netzleitvorrichtung eines Netzbetreibers des Stromnetzes die erfindungsgemäße Steuereinheit.

Es ergeben sich zum erfindungsgemäßen Verfahren gleichartige, gleichwertige und gleichwirkende Vorteile und/oder Ausgestaltungen der erfindungsgemäßen Steuereinheit.

Gemäß einer vorteilhaften Ausgestaltung der Erfindung werden die Zustandsgrößen durch Spannungsbeträge und Winkel an den Netzknoten ausgebildet.

Dadurch werden vorteilhafterweise die für elektrische Netze bevorzugten Zustandsgrößen verwendet. Hierbei kann das Stromnetz mehrphasig sein, das heißt jede Phase jedes Netzknotens weist einen Spannungsbetrag und einen Winkel auf. Die Winkel der mehreren Phasen können voneinander abhängig sein.

In einer vorteilhaften Weiterbildung der Erfindung wird die A-priori-Verteilung der Zustandsgrößen durch Messwerte von Wirkleistungen und/oder Blindleistungen und ihrer zugehörigen Messabweichungen und/oder ihre zeitliche Variabilität, insbesondere innerhalb eines Jahres, ermittelt und bereitgestellt.

Mit anderen Worten wird für jeden Netzknoten durch Messungen eine Verteilung der Wirkleistungen und/oder Blindleistungen ermittelt. Hierbei können den Messungen beziehungsweise den Messwerten Echtzeitdaten, historische Daten, jährliche Stromverbräuche und/oder Vorhersagen zugrunde liegen. Aus der Verteilung der Wirkleistungen und Blindleistungen kann dann die A-priori-Verteilung der Zustandsgrößen, insbesondere der komplexwertigen Spannungen (Spannungsbetrag und Winkel), ermittelt werden. Insbesondere wird als Maß für die Breite der A-priori-Verteilung die zeitliche Variabilität der Messwerte über einen festgelegten Zeitraum, insbesondere ein Jahr, verwendet. Die Verteilung der Wirkleistungen und/oder Blindleistungen kann ebenfalls als Hintergrundverteilung bezeichnet werden.

Besonders bevorzugt wird hierbei die A-priori-Verteilung der Zustandsgrößen, insbesondere der komplexwertigen Spannungen, aus den Messwerten der Wirkleistungen und/oder Blindleistungen mittels einer Lastflussrechnung ermittelt. Somit wird aus der Hintergrundverteilung der Wirkleistungen und/oder Blindleistungen die A-priori-Verteilung der Zustandsgrößen, insbesondere der komplexwertigen Spannungen, durch eine Lastflussrechnung ermittelt.

Gemäß einer vorteilhaften Ausgestaltung der Erfindung wird die A-priori-Verteilung approximativ durch ein Verwenden einer mehrdimensionalen Gaußverteilung ermittelt, wobei die zugehörigen Erwartungswerte und Varianzen aus den Messwerten und den zugehörigen Messabweichungen ermittelt werden.

Dadurch wird vorteilhafterweise eine ausreichende Genauigkeit erreicht. Mit anderen Worten wird die A-priori-Verteilung $\phi_{\text{priori}}$ durch eine mehrdimensionale Normalverteilung $\mathcal{N}(\mu, \Sigma)$ approximiert, das heißt es gilt $p(x) \equiv \phi_{\text{priori}} \sim \mathcal{N}(\boldsymbol{\mu}_{\text{priori}}, \boldsymbol{\Sigma}_{\text{priori}})$. Hierbei bezeichnet $\mu_{\textbf{priori}}$ den Erwartungswertvektor (Vektor der Erwartungswerte) und $\Sigma_{\textbf{priori}}$ die Kovarianzmatrix der Messwerte. Beispielsweise ist

$$\phi_{\text{priori}}(x) \sim \mathcal{N}\left(x \middle| \boldsymbol{\mu}_{\text{priori}}, \boldsymbol{\Sigma}_{\text{priori}}\right)$$
$$= \frac{1}{(2\pi)^{D/2}\left|\boldsymbol{\Sigma}_{\text{priori}}\right|^{1/2}} \exp\left[-\frac{1}{2}\left(x - \boldsymbol{\mu}_{\text{priori}}\right)^{\mathsf{T}} \boldsymbol{\Sigma}_{\text{priori}}^{-1}\left(x - \boldsymbol{\mu}_{\text{priori}}\right)\right]$$

wobei x hierbei den Vektor der Zustandsgrößen bezeichnet. Beispielsweise ist $x = (\text{Re}(V^{\mathsf{T}}), \text{Im}(V^{\mathsf{T}}))^{\mathsf{T}}$, wobei **V** den Vektor der komplexwertigen Spannungen bezeichnet. Die A-priori-Verteilung der komplexwertigen Spannung kann aus der Hintergrundverteilung der komplexwertigen Leistungen (Wirkleistung und Blindleistung) über eine affine Transformation, die das Ergebnis einer linearen Lastflussrechnung umfasst, ermittelt werden. Die genannte Transformation wird typischerweise in Form von Matrizen ausgebildet.

In einer vorteilhaften Weiterbildung der Erfindung wird die Messverteilung durch Messwerte der Zustandsgrößen, durch Messwerte von Wirkleistungen und Blindleistungen und/oder durch Messwerte von Strömen und den jeweils zugehörigen Messabweichungen ermittelt und bereitgestellt.

Hierbei ist es wiederum besonders vorteilhaft, wenn die Messverteilung approximativ durch ein Verwenden einer mehrdimensionalen Gaußverteilung ermittelt wird, wobei die zugehörigen Erwartungswerte und die Varianzen aus den Messwerten und den zugehörigen Messabweichungen ermittelt werden.

Mit anderen Worten kann die Messverteilung näherungsweise durch

$$p(z|x) \equiv \phi_{\text{measure|true}} \sim \mathcal{N}(\boldsymbol{\mu}_{\text{measure|true}}, \boldsymbol{\Sigma}_{\text{measure|true}})$$ mit $\mu_{\text{measure|true}} \approx h(\mu_{\text{prior}})$ ermittelt werden, wobei $h$ eine Messfunktion bezeichnet, die die Erwartungswerte auf die Messwerte abbildet. Beispielsweise ist $h(x) = (P_i = \text{Re}(\underline{S}_{\text{bus},i}), P_{fi} = \text{Re}(\underline{S}_{f,fi}), P_i = \text{Re}(\underline{S}_{t,ti}), Q_i = \text{Im}(\underline{S}_{\text{bus},i}), Q_{fi} = \text{IM}(\underline{S}_{f,fi}), Q_i = Im(\underline{S}_{t,ti}), V_{i,\text{mag}} = |\underline{V}_i|, V_{i,\text{ang}} = \angle \underline{V}_i, I_{ft,\text{mag}} = |\underline{I}_{f,fi}|, I_{ti,\text{mag}} = |\underline{I}_{t,ti}|, I_{i,\text{ang}} = \angle \underline{I}_{f,fi}, I_{ti,\text{ang}} = \angle \underline{I}_{t,ti})^T$, wobei unterstrichene Größen komplexe Größen kennzeichnen. Weiterhin sind die Scheinleistungen $\underline{S}_{\text{bus}} = \text{diag}(\underline{V}) \underline{Y}_{\text{bus}}^* \underline{V}^*$, $\underline{S}_f = \text{diag}(\underline{V}_f) \underline{Y}_f^* \underline{V}^*$, $\underline{I}_f = \underline{Y}_f \underline{V}$ für $N + 1$ Netzknoten und $L$ Leitungen, das heißt $\underline{i} \in \{0 \dots N\}$, $fi \in \{0 \dots L\}$ und $ti \in \{0 \dots L\}$. Hierbei können die ersten sechs Größen der genannten Messfunktion mittels RTU-Sensoren (englisch: Remote Terminal Unit) und die verbleibenden Größen mittels PMUs (englisch: Phasor Measurement Unit) und zugehörigen Messabweichungen ermittelt werden. Die Netzimpedanzen sind jeweils mit Y gekennzeichnet, wobei durch diese die Netztopologie berücksichtigt wird. Weiterhin können externe an eine RTU angeschlossene und/oder angebundene Sensoren Messwerte an eine Leittechnik des Stromnetzes übermitteln.

Somit kann aus den Wirkleistungen P und den Blindleistungen Q, das heißt den Scheinleistungen $\underline{S}$, über die Messfunktion die Messverteilung näherungsweise ermittelt werden.

Gemäß einer vorteilhaften Ausgestaltung der Erfindung wird die A-posteriori-Verteilung durch das Produkt der A-priori-Verteilung und der Messverteilung ermittelt.

Vorteilhafterweise wird dadurch ein Bayesianischer Ansatz zur Ermittlung der A-posteriori-Verteilung der Zustandsgrößen verwendet. Sind die A-priori-Verteilung und die Messverteilung als mehrdimensionale Gaußverteilung ausgebildet, dann bildet die A-posteriori-Verteilung vorteilhafterweise ebenfalls eine mehrdimensionale Gaußverteilung aus, das heißt es ist

$$p(x|z) \equiv \phi_{\text{posteriori}} \propto \phi_{\text{measure|true}} \cdot \phi_{\text{priori}} \sim \mathcal{N}(\boldsymbol{\mu}_{\text{measure|true}}, \boldsymbol{\Sigma}_{\text{measure|true}}) \cdot$$

$$\mathcal{N}(\boldsymbol{\mu}_{\text{priori}}, \boldsymbol{\Sigma}_{\text{priori}}) = \mathcal{N}(\boldsymbol{\mu}_{\text{posteriori}}, \boldsymbol{\Sigma}_{\text{posteriori}})$$. Der Erwartungswertvektor $\mu_{\text{posteriori}}$ und die Kovarianzmatrix $\Sigma_{\text{posteriori}}$ sind hierbei eindeutig durch $\mu_{\text{measure|true}}$, $\mu_{\text{priori}}$ sowie $\Sigma_{\text{measure|true}}$ und $\Sigma_{\text{priori}}$ ermittelbar und bestimmt. Mit anderen Worten ergibt das Produkt zweier Gaußverteilungen wieder eine Gaußverteilung.

In einer vorteilhaften Weiterbildung der Erfindung wird die Wahrscheinlichkeit für den kritischen Zustand durch ein Integral über die Marginalverteilung ermittelt, wobei sich das Integral bis zu einem für die Zustandsgröße festgelegten Schwellenwert erstreckt.

Die Marginalverteilung (Randverteilung) eines Netzknotens wird durch das Spurbilden (Integration oder Summe) über die weiteren Netzknoten ermittelt. Die Marginalverteilung ist somit eine eindimensionale Verteilung. Ist die A-posteriori-Verteilung eine mehrdimensionale Gaußverteilung, dann bildet die Marginalverteilung eine eindimensionale Gaußverteilung aus. Die Wahrscheinlichkeit für den kritischen Zustand wird nun vorteilhafterweise für einen der Netzknoten gemäß $p_{\text{critical}} = \int_{-\infty}^{X_{\text{lower limit}}} \phi_{\text{posteriori}} \, dX$ ermittelt, falls ein unterer Schwellenwert $V_{\text{lower limit}}$ (Grenzwert) für die Zustandsgröße X des Netzknotens festgelegt ist, oder gemäß $p_{\text{critical}} = \int_{X_{\text{upper limit}}}^{\infty} \phi_{\text{posteriori}} \, dX$, falls ein oberer Schwellenwert $X_{\text{upper limit}}$ (Grenzwert) für die Zustandsgröße X des Netzknotens festgelegt ist. Die Wahrscheinlichkeiten können in Prozent angegeben werden, wodurch die genannten Integrale einen Faktor 100 % umfassen. Für mehrere Netzknoten können die Wahrscheinlichkeiten für einen kritischen Zustand zu einem Vektor $\boldsymbol{p}_{\text{critical}}$ zusammengefasst werden.

Hierbei wird somit bevorzugt als Schwellenwert für die Zustandsgröße der untere Grenzwert $X_{\text{lower limit}}$ oder obere Grenzwert $X_{\text{upper limit}}$ eines für die Zustandsgröße zulässigen Wertebereiches verwendet.

Besonders bevorzugt ist die Zustandsgröße der Betrag der Spannung, das heißt $X = |V|$. Der zulässige Wertebereich für den Spannungsbetrag beziehungsweise die Spannung erstreckt sich beispielsweise in Deutschland von 207 Volt (unterer Grenzwert) bis 253 Volt (oberer Grenzwert). Somit ist der zulässige Bereich durch ±**10** Prozent des Nennwertes von 230 Volt gekennzeichnet. Weitere Länder, beispielsweise die USA, weisen ebenfalls als zulässigen Bereich ein symmetrisches Prozentband um ihren jeweiligen Nennwert auf.

Bevorzugt wird der zulässige Wertebereich durch ±X Prozent eines Nennwertes der Zustandsgröße ausgebildet, wobei X einen Wert zwischen 0 und 10 aufweist, oder wenn nicht in Prozent angegeben zwischen 0 und 0,1 aufweist.

Dadurch wird vorteilhafterweise ein symmetrisches zulässiges Prozentband für die Zustandsgröße ausgebildet.

Insbesondere wird gemäß einer vorteilhaften Ausgestaltung der Erfindung der zulässige Wertebereich durch ±10 Prozent, ±6 Prozent, ±5 Prozent oder ±4 Prozent eines Nennwertes der Zustandsgröße ausgebildet.

Insbesondere können verschiedene Netzbetreiber verschiedene zulässige Wertebereiche aufweisen. Typischerweise verwenden Netzbetreiber in Deutschland die Werte ±10 Prozent, ±6 Prozent oder ±4 Prozent, sodass der für das Ermitteln der kritischen Wahrscheinlichkeit verwendete Grenzwert vorteilhafterweise auf die verwendeten zulässigen Wertebereiche abgestimmt ist.

In einer vorteilhaften Weiterbildung der Erfindung werden/wird als systemdienliche Maßnahmen eine Wirkleistungseinspeisung, eine Blindleistungseinspeisung, ein Anzeigen einer Statusmeldung, ein Schaltvorgang, ein Regeln eines oder mehrerer regelbarer Ortsnetztransformatoren und/oder eine Abregelung durch die Steuereinheit durchgeführt.

Dadurch können vorteilhafterweise typischerweise innerhalb des Stromnetzes vorhandene Ressourcen zur Steuerung und somit zur Abminderung oder Verhinderung des kritischen Zustandes verwendet werden.

Hierbei ist es besonders bevorzugt, wenn die Statusmeldung wenigstens drei Stufen umfasst, wobei jede der Stufen durch einen Wertebereich für die ermittelte Wahrscheinlichkeit festgelegt ist.

Mit anderen Worten ist ein Ampelsystem, umfassend die drei Stufen, beispielsweise durch die Farben Grün (Normal), Gelb (Warnung) und Rot (Alarm) gekennzeichnet, vorteilhaft. Basierend auf den Stufen beziehungsweise Warnstufen können somit vorteilhafterweise spezifischere Maßnahmen zur Steuerung des Stromnetzes vorgesehen sein. Das ist deshalb von Vorteil, da grundsätzlich in Anzahl und Größe möglichst geringe Eingriffe erfolgen sollen. Beispielsweise können bei der zweiten Stufe (Gelb/Warnung) andere netzdienliche und/oder systemdienliche Maßnahmen als bei der dritten Stufe (Rot/Alarm) vorgesehen und durchgeführt werden.

Hierbei sind die drei Stufen besonders bevorzugt durch die Wertebereiche von 0 Prozent bis 5 Prozent, von größer als 5 Prozent bis 15 Prozent und durch größer als 15 Prozent festgelegt.

Mit anderen Worten sind die drei Stufen durch $0 \leq p_{critical} \leq 5\,\%$, **$5\,\% < p_{critical} \leq 15\,\%$** und $p_{critical}$ **> 15 %** gekennzeichnet. Dadurch wird vorteilhafterweise ein besonders vorteilhafter Drei-Stufen-Plan zur Vermeidung von kritischen Netzzuständen ausgebildet.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:

Figur 1    ein Ablaufdiagramm einer Ausgestaltung des erfindungsgemäßen Verfahrens;

Figur 2    eine beispielhafte A-priori-Verteilung, Messverteilung sowie A-posteriori-Verteilung;

Figur 3    eine beispielhafte Marginalverteilung für einen Netzknoten; und

Figur 4    ein Ampelsystem der kritischen Wahrscheinlichkeiten für ein Stromnetz.

Gleichartige, gleichwertige oder gleichwirkende Elemente können in einer der Figuren oder in den Figuren mit denselben Bezugszeichen versehen sein.

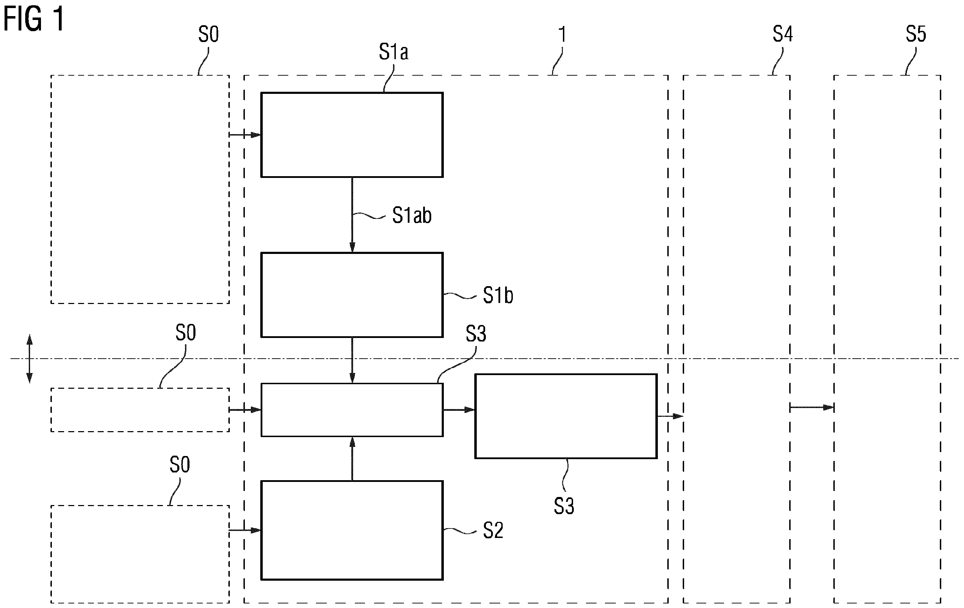

Die Figur 1 zeigt ein exemplarisches Ablaufdiagramm einer Ausgestaltung der vorliegenden Erfindung.

Hierzu zeigt die Figur 1 eine Steuereinheit 1 gemäß einer Ausgestaltung der vorliegenden Erfindung, die, basierend auf einer ermittelten Wahrscheinlichkeit für einen kritischen Zustand des Stromnetzes, zur Steuerung eines Stromnetzes ausgestaltet und eingerichtet ist.

Das Stromnetz umfasst mehrere Netzknoten. Typischerweise ist ein kritischer Zustand des Stromnetzes dadurch gekennzeichnet, dass an wenigstens einem der Netzkonten ein Grenzwert für den Betrieb des Stromnetzes verletzt, das heißt unter oder überschritten ist. Beispielsweise liegt eine Verletzung des zulässigen Spannungsbandes vor, welches einen unteren und oberen Grenzwert aufweist. Das vorliegende Verfahren ist dazu ausgebildet, eine Wahrscheinlichkeit für einen kritischen Zustand eines oder mehrerer Netzknoten zu ermitteln, und basierend auf der ermittelten Wahrscheinlichkeit netzstabilisierend einzugreifen, sodass der wahrscheinliche kritische Zustand abgemildert wird oder bestenfalls nicht eintritt.

Ein erster Schritt S1 des dargestellten Verfahrens umfasst drei Teilschritte S1a, S1ab, S1b.

Im ersten Teilschritt Sla wird eine Hintergrundverteilung (englisch: Background Distribution) ermittelt. Die Hintergrundverteilung entspricht der statistischen Verteilung der Wirkleistungen und Blindleistungen, das heißt der Scheinleistung, an jedem Netzknoten des Stromnetzes. Die Hintergrundverteilung kann aus erfassten Echtzeitmessungen für die Leistungen, aus historischen Daten (SM-Data), aus jährlichen Energieverbräuchen und/oder aus Vorhersagen, beispielsweise für die Einspeiseleistung einer oder mehrerer Photovoltaikanlagen, ermittelt werden. Die Messungen können Wirkleistungen, Blindleistungen, Spannungsbeträge, Spannungswinkel (Winkel), Strombeträge und/oder Stromwinkel, umfassen. Die genannten Daten, aus welchen die Hintergrundverteilung ermittelt wird, sind durch den nullten Schritt S0 gekennzeichnet und bilden sogenannte Eingangsdaten (englisch: Input) aus. Hierbei wird eine Hintergrundverteilung möglichst von jedem der Netzknoten ermittelt. Beispielsweise wird die Wirkleistung an mehreren der Netzknoten erfasst. Diese weist typischerweise an jedem Netzknoten eine Variation auf. Durch mehrere Messungen kann somit die Verteilung der Wirkleistung an jedem der herangezogenen Netzknoten ermittelt werden.

Aus der im Schritt Sla ermittelten Hintergrundverteilung beziehungsweise Hintergrundverteilungen wird durch eine affine Transformation einer Lastflussrechnung, die typischerweise die komplexen Leistungen auf die komplexen Spannungen abbildet, die A-priori-Verteilung der komplexwertigen Spannungen ermittelt (siehe Bezugszeichen Slab). Im Teilschritt S1b ist somit die A-priori-Verteilung ermittelt. Hierzu kann weiterhin angenommen werden, dass die A-priori-Verteilung der Zustandsgrößen, bevorzugt der komplexen Spannungen, durch eine mehrdimensionale Gaußverteilung beziehungsweise Normalverteilung approximiert wird, wobei der zugehörige Erwartungsvektor durch die Mittelwerte der Zustandsgrößen, bevorzugt der komplexen Spannungen, und die zugehörige Kovarianzmatrix der Zustandsgrößen, bevorzugt der komplexen Spannungen, durch die Messabweichungen der Zustandsgrößen gebildet wird.

In einem zweiten Schritt S2 des Verfahrens wird weiterhin eine Messverteilung von Messgrößen bei gegebenem Zustand des Stromnetzes bereitgestellt. Die Messverteilung wird durch Messwerte der erfassten Messgrößen ermittelt. Messgrößen sind insbesondere die komplexen Leistungen (Wirkleistung und Blindleistung), die komplexen Spannungen sowie die komplexen Ströme. Die jeweiligen Messwerte und ihre zugehörigen erforderlichen Varianzen können mittels RTU-Sensoren (englisch: Remote Terminal Unit) und PMUs (englisch: Phasor Measurement Unit) ermittelt werden. Insbesondere können die komplexen Leistungen sowie die Spannungsbeträge mittels RTU-Sensoren ermittelt werden. Die Spannungswinkel und komplexen Ströme können insbesondere mittels PMUs ermittelt werden. Weiterhin kann die Netztopologie des Stromnetzes zum Ermitteln der Messverteilung verwendet werden. Die genannten Eingangsdaten zum Ermitteln der Messverteilung sind wiederum als Input mit dem Bezugszeichen S0 gekennzeichnet.

Die Messverteilung kann näherungsweise durch eine mehrdimensionale Gaußverteilung beziehungsweise Normalverteilung ermittelt werden. Diese ist durch einen Erwartungswertvektor und eine Kovarianzmatrix festgelegt. Der Erwartungswertvektor der Messgrößen, bevorzugt der komplexen Leistungen, wird durch die Mittelwerte der Messgrößen festgelegt. Die Kovarianzmatrix wird durch die Messabweichung der Messgrößen festgelegt. Dadurch kann basierend auf den genannten Messungen die Messverteilung ermittelt werden.

In einem dritten Schritt S3 des Verfahrens wird eine A-posteriori-Verteilung mittels der A-Priori-Verteilung und der Messverteilung ermittelt. Dies erfolgt vorliegend durch den Satz von Bayes. Wird die A-Priori-Verteilung der Zustandsgrößen $x$, insbesondere der komplexen Spannungen, mit $p(x)$ und die Messverteilung der Messgrößen $z$, insbesondere der komplexen Leistungen, bei gegebenem Zustand $x$ mit $p(z|x)$ bezeichnet, dann kann die A-posteriori-Verteilung $p(x|z)$ durch $p(x|z) = N \cdot p(z|x) \cdot p(x)$ ermittelt werden, wobei $N$ ein Proportionalitätsfaktor ist. Der Proportionalitätsfaktor $N$ ist unabhängig von $x$ und kann dadurch ermittelt werden, dass das Integral beziehungsweise die Summe der Wahrscheinlichkeiten $p(z|x)$ den Wert 1 aufweisen muss.

Die ermittelte A-posteriori-Verteilung ist deshalb vorteilhaft, da durch diese die Verteilung der Zustandsgrößen, insbesondere der komplexen Spannungen, bei gegebenen Messungen der Messgrößen, insbesondere der komplexen Leistungen, bestimmt ist. Dies korrespondiert zu einem typischen Betrieb des Stromnetzes, demnach der Zustand nicht oder ungenügend messbar ist. Die Messgrößen hingegen, insbesondere die komplexen Leistungen, sind ausreichend gut messbar.

In einem vierten Schritt S4 des Verfahrens wird eine Wahrscheinlichkeit für einen kritischen Zustand für wenigstens einen der Netzknoten mittels der aus der A-posteriori-Verteilung für den Netzknoten ermittelten Marginalverteilung ermittelt.

Die Marginalverteilung beziehungsweise Randverteilung wird durch Integration über die weiteren Netzknoten ermittelt. Dies kann für jeden der Netzknoten durchgeführt werden, sodass für jeden der Netzknoten eine Marginalverteilung vorliegt. Anschließend wird die jeweilige Marginalverteilung bis zu einem unteren oder oberen Grenzwert für die Zustandsgröße an dem betrachteten Netzknoten integriert. Insbesondere wird durch die genannten Grenzwerte ein zulässiger Spannungsbereich, beispielsweise von 207 bis 253 Volt, beschränkt. Für jeden der Grenzwerte, insbesondere für 207 Volt und für 253 Volt, kann dann eine Wahrscheinlichkeit für dessen Verletzung aus der Marginalverteilung für jeden der Netzknoten ermittelt werden.

In einem fünften Schritt S5 des Verfahrens werden durch die Steuereinheit 1 netzdienliche und/oder systemdienliche Maßnahmen durchgeführt, wenn die ermittelte Wahrscheinlichkeit größer oder gleich einem festgelegten Schwellenwert ist. Beispielsweise erfolgen erste Maßnahmen, wenn die Verletzung des Spannungsbandes mit einer ermittelten Wahrscheinlichkeit größer als 5 Prozent vorliegt. Zweite Maßnahmen können bevorzugt erfolgen, wenn die Verletzung des Spannungsbandes mit einer ermittelten Wahrscheinlichkeit von größer als 15 Prozent vorliegt. Für die Netzknoten können dieselben oder verschiedene Schwellenwerte festgelegt werden.

Alternativ oder ergänzend kann zudem im fünften Schritt S5 der wahrscheinlichste Zustand des Stromnetzes ermittelt werden. Dies erfolgt mittels einem Maximieren der A-posteriori-Verteilung (englisch: Maximum-A-Posteriori Estimator; abgekürzt MAP). Mit anderen Worten wird hierbei der Zustand ermittelt, der die A-posteriori-Verteilung maximiert. Dies entspricht dem wahrscheinlichsten Zustand.

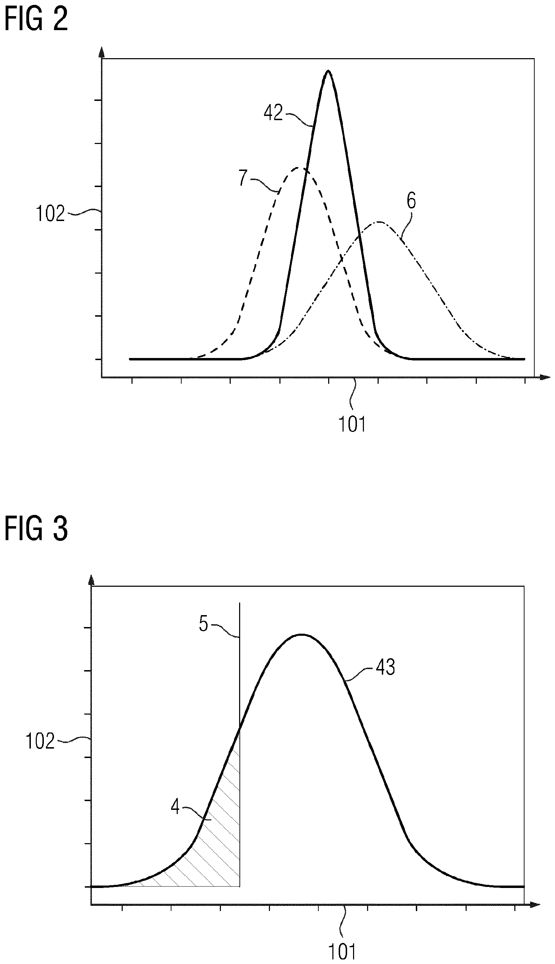

Die Figur 2 zeigt beispielhaft eine A-priori-Verteilung 6, eine Messverteilung 7 sowie eine A-posteriori-Verteilung 42.

An der Abszisse 101 des in der Figur 2 gezeigten Diagramms ist der Wert einer Zustandsgröße eines Netzknotens aufgetragen, beispielsweise der Spannungsbetrag am Netzknoten. An der Ordinate 102 ist der Wert der jeweiligen Verteilung aufgetragen.

Hierbei wurden die Verteilungen 6,7 und 42 jeweils durch eine Gaußverteilung approximiert. Aus der Figur 2 ist erkennbar, dass die A-posteriori-Verteilung 42 schärfer als die A-priori-Verteilung 6 und Messverteilung 7 ist. Das ist deshalb der Fall, da diese die Information aus der A-priori-Verteilung 6 und der Messverteilung 7 umfasst. Dadurch kann vorteilhafterweise eine verbesserte Ermittlung erfolgen, ob ein kritischer Zustand wahrscheinlich ist. Basierend hierauf kann eine verbesserte Steuerung des Stromnetzes erfolgen.

Nach dem Satz von Bayes gilt $p(x|z) = p(z|x) \cdot p(x)/p(z)$. Hierbei ist $p(x|z)$ die A-posteriori-Verteilung 42, $p(z|x)$ die Messverteilung 7 und p(x) die A-priori-Verteilung 6 der Zustandsgrößen. Die weitere A-priori-Verteilung der Messungen p(z) ist unabhängig vom wahren Zustand x und kann als konstant angenommen werden. Somit gilt $p(x|z) \propto p(z|x) \cdot p(x)$.

Die Figur 3 zeigt die Marginalverteilung 43 eines Netzknotens des Stromnetzes.

An der Abszisse 101 des in der Figur 3 gezeigten Diagramms ist der Wert einer Zustandsgröße eines Netzknotens aufgetragen, beispielsweise der Spannungsbetrag am Netzknoten. An der Ordinate 102 ist der Wert der jeweiligen Marginalverteilung 43 aufgetragen.

Die Marginalverteilung 43 wird aus der ermittelten A-posteriori-Verteilung durch Summation beziehungsweise Integration der weiteren Netzknoten gebildet. Mit anderen Worten werden die weiteren Netzknoten ausintegriert. Dadurch kann aus der mehrdimensionalen A-posteriori-Verteilung für jeden Netzknoten eine eindimensionale Verteilung, die Marginalverteilung 43, ermittelt werden. Die Marginalverteilung 43 beschreibt hierbei die Verteilung der Zustandsgrößen eines Netzknotens, wenn die Realisationen der weiteren Netzknoten nicht berücksichtigt werden. Sind beispielsweise $V_1$ und $V_2$ die Spannungsbeträge eines ersten und zweiten Netzknotens und $p(V_1, V_2|z)$ die gemeinsame mehrdimensionale A-posteriori-Verteilung, dann ist die Marginalverteilung für den ersten Netzknoten durch

$$p(V_1|z) = \int_{-\infty}^{\infty} p(V_1, V_2|z)\,\mathrm{d}V_2$$ ermittelbar. Die Marginalverteilung des zweiten Netzknotens ergibt sich entsprechend.

Die Figur 3 zeigt weiterhin einen unteren Grenzwert 5 für den Wert der Zustandsgröße, insbesondere des Spannungsbetrages. Weiterhin kann alternativ oder ergänzend ein oberer Grenzwert, wie beim zulässigen Spannungsband, vorgesehen sein.

Mittels einer Integration der Marginalverteilung 43 bis zum unteren Grenzwert 5 wird die Fläche 4 unter der Marginalverteilung 43 bis zum Grenzwert 5 bestimmt. Dadurch wird eine Wahrscheinlichkeit 4 für ein Verletzen des unteren Grenzwertes 5 ermittelt. Dies entspricht der ermittelten Wahrscheinlichkeit für einen kritischen Netzzustand.

Mit anderen Worten ist für die Spannung beziehungsweise den Spannungsbetrag

$$V \quad p_{\text{critical}} = \int_{-\infty}^{203} p(V|z)\,\mathrm{d}V$$ für den unteren Grenzwert und $$p_{\text{critical}} = \int_{257}^{\infty} p(V|z)\,\mathrm{d}V$$ für den oberen Grenzwert. Ist eine der ermittelten Wahrscheinlichkeiten für einen kritischen Zustand des Stromnetzes, vorliegend für die Verletzung des Spannungsbandes von 203 Volt bis 253 Volt, größer oder gleich einem festgelegten Schwellenwert, dann werden durch die Steuereinheit systemdienliche und/oder netzdienliche Maßnahmen eingeleitet, die bestenfalls den kritischen Zustand verhindern oder wenigstens abmildern.

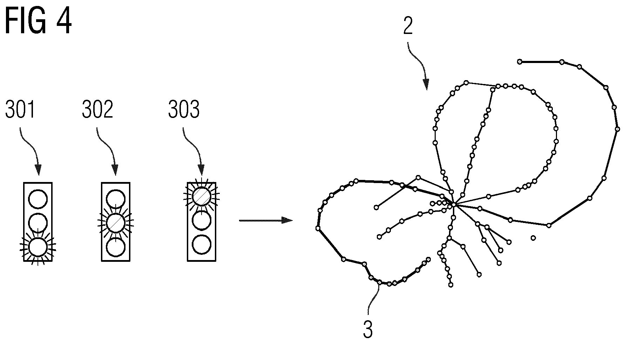

Die Figur 4 zeigt ein Drei-Stufen-Warnsystem, welches auf der ermittelten Wahrscheinlichkeit für einen kritischen Zustand eines Netzknotens 3 beziehungsweise eines Stromnetzes 2 basiert.

Das dargestellte Drei-Stufen-Warnsystem umfasst die Stufen "Normal", "Warnung" und "Alarm" 301, 302, 303 als Betriebsstufen beziehungsweise Warnstufen des Stromnetzes 2. Diese können ebenfalls mit einem Farbsystem, vergleichbar einer Ampel, dargestellt werden. Hierbei ist die Farbe Grün der ersten Stufe 301 "Normal", die Farbe Gelb der zweiten Stufe 302 "Warnung" und die Farbe Rot der dritten Stufe 303 "Alarm" zugeordnet. Die verschiedenen genannten Farben sind in der Figur durch verschiedene Schraffierungen dargestellt.

Grundsätzlich sind die Stufen 301, 302, 303 beziehungsweise Warnstufen durch Wertebereiche der ermittelten Wahrscheinlichkeit für einen kritischen Zustand (kritische Wahrscheinlichkeit) gekennzeichnet. Die erste Stufe 301 weist somit eine kritische Wahrscheinlichkeit von 0 Prozent bis X-Prozent, bevorzugt von 0 % bis 5 %, auf. Die zweite Stufe 302 weist eine kritische Wahrscheinlichkeit von X-Prozent bis Y-Prozent, bevorzugt von 5 % (ausgeschlossen) bis 15 % auf. Die dritte Stufe 303 weist eine kritische Wahrscheinlichkeit oberhalb von Z-Prozent, bevorzugt von oberhalb von 15 % (ausgeschlossen), auf. Hierbei ist X<Y<Z.

Weiterhin ist in der Figur 4 ein Stromnetz 2 mit mehreren Netzknoten 3 dargestellt. Für jeden der Netzknoten 3 des Stromnetzes 2 kann eine kritische Wahrscheinlichkeit für eine Zustandsgröße des Stromnetzes 2 an dem jeweiligen Netzknoten 3 gemäß der vorliegenden Erfindung und/oder einer ihrer Ausgestaltungen ermittelt werden. Insbesondere ist die Zustandsgröße die Spannung beziehungsweise der Spannungsbetrag der komplexwertigen Spannung. Allerdings kann einer der Netzknoten 3 mehrere Zustandsgrößen aufweisen und für jede der Zustandsgrößen kann eine kritische Wahrscheinlichkeit aus zugehörigen Grenzwerten gemäß der vorliegenden Erfindung und/oder einer ihre Ausgestaltungen ermittelt werden.

In der Figur 4 sind die Netzknoten 3 des Stromnetzes 2 gemäß ihrer ermittelten kritischen Wahrscheinlichkeit in den Farben Grün, Gelb und Rot eingefärbt beziehungsweise entsprechend schraffiert. Dadurch ist erkennbar, wann und an welcher Stelle des Stromnetzes 2 es wahrscheinlich zu einem Problem kommt und an welcher Stelle des Stromnetzes 2 netzdienliche und/oder systemdienliche Maßnahmen erforderlich sind.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

| | |
|---|---|
| 1 | Steuereinheit |
| 2 | Stromnetz |
| 3 | Netzknoten |
| 4 | Wahrscheinlichkeit für kritischen Zustand |
| 5 | Schwellenwert für Zustandsgröße |
| 6 | A-priori-Verteilung |
| 7 | Messverteilung |
| 42 | A-posteriori-Verteilung |
| 43 | Marginalverteilung |
| S0 | Eingang |
| 101 | Abszisse |
| 102 | Ordinate |
| 301 | erste Stufe |
| 302 | zweite Stufe |
| 303 | dritte Stufe |
| S1a | erster Schritt - Ermittlung Hintergrundverteilung |
| S1ab | erster Schritt - Lastflussrechnung |
| S1b | erster Schritt - Ermittlung A-priori-Verteilung |
| S2 | zweiter Schritt |
| S3 | dritter Schritt |
| S4 | vierter Schritt |
| S5 | fünfter Schritt |

**Patentansprüche**

1. Verfahren zur Steuerung eines Stromnetzes (2) mit mehreren Netzknoten (3) mittels einer Steuereinheit (1), **gekennzeichnet durch** die folgenden Schritte:

- (S1a, S1b, S1ab) Bereitstellen einer A-priori-Verteilung (6) für Zustandsgrößen des Stromnetzes (2);
- (S2) Bereitstellen einer Messverteilung (7) von Messgrößen bei gegebenem Zustand des Stromnetzes (2);
- (S3) Ausbilden einer A-posteriori-Verteilung (42) für die Zustandsgrößen mittels der A-priori-Verteilung (6) und der Messverteilung (7);
- (S4) Ermitteln einer Wahrscheinlichkeit (4) für einen kritischen Zustand für wenigstens einen der Netzknoten (3) mittels der aus der A-posteriori-Verteilung (42) für den Netzknoten ermittelten Marginalverteilung (43); und

- (S5) Durchführen von netzdienlichen und/oder systemdienlichen Maßnahmen durch die Steuereinheit (1), wenn die ermittelte Wahrscheinlichkeit (4) größer oder gleich einem festgelegten Schwellenwert ist.

2. Verfahren gemäß Anspruch 1, **gekennzeichnet dadurch, dass** die Zustandsgrößen durch Spannungsbeträge und Winkel an den Netzknoten (3) ausgebildet werden.

3. Verfahren gemäß Anspruch 1 oder 2, **gekennzeichnet dadurch, dass** die A-priori-Verteilung (6) durch Messwerte von Wirkleistungen und/oder Blindleistungen und ihrer zugehörigen Messabweichungen und/oder ihre zeitliche Variabilität ermittelt und bereitgestellt wird.

4. Verfahren gemäß Anspruch 3, **gekennzeichnet dadurch, dass** das Ermitteln der A-priori-Verteilung (6) aus den Messwerten der Wirkleistungen und/oder Blindleistungen mittels einer Lastflussrechnung (Slab) erfolgt.

5. Verfahren gemäß Anspruch 3 oder 4, **gekennzeichnet dadurch, dass** die A-priori-Verteilung (6) approximativ durch ein Verwenden einer mehrdimensionalen Gaußverteilung ermittelt wird, wobei die zugehörigen Erwartungswerte und Varianzen aus den Messwerten und den zugehörigen Messabweichungen ermittelt werden.

6. Verfahren gemäß einem der vorhergehenden Ansprüche, **gekennzeichnet dadurch, dass** die Messverteilung (7) durch Messwerte der Zustandsgrößen, durch Messwerte von Wirkleistungen und Blindleistungen und/oder durch Messwerte von Strömen und den jeweils zugehörigen Messabweichungen ermittelt und bereitgestellt wird.

7. Verfahren gemäß Anspruch 6, **gekennzeichnet dadurch, dass** die Messverteilung (7) approximativ durch ein Verwenden einer mehrdimensionalen Gaußverteilung ermittelt wird, wobei die zugehörigen Erwartungswerte und die Varianzen aus den Messwerten und den zugehörigen Messabweichungen ermittelt werden.

8. Verfahren gemäß einem der vorhergehenden Ansprüche, **gekennzeichnet dadurch, dass** die A-posteriori-Verteilung (42) durch das Produkt der A-priori-Verteilung (6) und der Messverteilung (7) ermittelt wird.

9. Verfahren gemäß einem der vorhergehenden Ansprüche, **gekennzeichnet dadurch, dass** die Wahrscheinlichkeit (4) für den kritischen Zustand durch ein Integral über die Marginalverteilung (43) ermittelt wird, wobei sich das Integral bis zu einem für die Zustandsgröße festgelegten Schwellenwert (5) erstreckt.

10. Verfahren gemäß Anspruch 9, **gekennzeichnet dadurch, dass** als Schwellenwert (5) für die Zustandsgröße der untere oder obere Grenzwert eines für die Zustandsgröße zulässigen Wertebereiches verwendet wird.

11. Verfahren gemäß Anspruch 10, **gekennzeichnet dadurch, dass** der zulässige Wertebereich durch ±10 Prozent, ±6 Prozent, ±5 Prozent oder ±4 Prozent eines Nennwertes der Zustandsgröße ausgebildet wird.

12. Verfahren gemäß einem der vorhergehenden Ansprüche, **gekennzeichnet dadurch, dass** als systemdienliche Maßnahmen eine Wirkleistungseinspeisung, eine Blindleistungseinspeisung, ein Anzeigen einer Statusmeldung, ein Schaltvorgang, ein Regeln eines oder mehrerer regelbarer Ortsnetztransformatoren und/oder eine Abregelung durch die Steuereinheit (1) durchgeführt werden/wird.

13. Verfahren gemäß Anspruch 12, **gekennzeichnet dadurch, dass** die Statusmeldung wenigstens drei Stufen (301, 302, 303) umfasst, wobei jede der Stufen (301, 302, 303) durch einen Wertebereich für die ermittelte Wahrscheinlichkeit (4) festgelegt ist.

14. Verfahren gemäß Anspruch 13, **gekennzeichnet dadurch, dass** die drei Stufen (301, 302, 303) durch die Wertebereiche von 0 Prozent bis 5 Prozent, von größer als 5 Prozent bis 15 Prozent und durch größer als 15 Prozent festgelegt sind.

15. Steuereinheit (1) zur Steuerung eines Stromnetzes (2) mit mehreren Netzknoten (3), umfassend eine Recheneinheit, **dadurch gekennzeichnet, dass** die Recheneinheit dazu eingerichtet ist, ein Verfahren gemäß einem der vorhergehenden Ansprüche durchzuführen.

FIG 1

FIG 2

FIG 3

FIG 4

301

302

303

2

3

**Europäisches Patentamt**
**European Patent Office**
**Office européen des brevets**

# EUROPÄISCHER RECHERCHENBERICHT

**Nummer der Anmeldung**

**EP 22 18 6727**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TIM RITMEESTER ET AL: "State Estimation of Power Flows for Smart Grids via Belief Propagation", ARXIV.ORG, CORNELL UNIVERSITY LIBRARY, 201 OLIN LIBRARY CORNELL UNIVERSITY ITHACA, NY 14853, 18. Dezember 2020 (2020-12-18), XP081842542, DOI: 10.1103/PHYSREVE.102.012311 * Seite 1 – Seite 5 * * Zusammenfassung * ----- | 1-15 | INV. H02J3/00 |
| A | CN 107 069 716 A (UNIV SHANDONG; CHINA ELECTRIC POWER RES INST ET AL.) 18. August 2017 (2017-08-18) * das ganze Dokument * * ----- | 1-15 | |
| | | | **RECHERCHIERTE SACHGEBIETE (IPC)**<br><br>H02J |

Der vorliegende Recherchenbericht wurde für alle Patentansprüche erstellt

| Recherchenort | Abschlußdatum der Recherche | Prüfer |
|---|---|---|
| München | 6. Februar 2023 | Zettler, Karl-Rudolf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes Dokument

EPO FORM 1503 03.82 (P04C03)

# EP 4 312 329 A1

## ANHANG ZUM EUROPÄISCHEN RECHERCHENBERICHT
## ÜBER DIE EUROPÄISCHE PATENTANMELDUNG NR.

EP 22 18 6727

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-02-2023

| Im Recherchenbericht angeführtes Patentdokument | Datum der Veröffentlichung | Mitglied(er) der Patentfamilie | Datum der Veröffentlichung |
|---|---|---|---|
| CN 107069716 A | 18-08-2017 | KEINE | |

Für nähere Einzelheiten zu diesem Anhang : siehe Amtsblatt des Europäischen Patentamts, Nr.12/82